# EUROPEAN PATENT SPECIFICATION

(11) **EP 1 568 990 B1**
(45) Date of publication and mention of the grant of the patent: **22.06.2016**
(21) Application number: 03811929.3
(22) Date of filing: 26.11.2003
(51) Int. Cl.: G01N 27/12

(54) **OXIDIZING GAS SENSOR**
SENSOR FÜR OXIDIERENDES GAS
DETECTEUR DE GAZ OXYDANT

(30) Priority: 27.11.2002 JP 2002344585
(43) Date of publication of application: 31.08.2005
(73) Proprietor: NGK Spark Plug Co., Ltd., Nagoya-shi, Aichi 467-0872 (JP)
(72) Inventor: KIDA, Masahito, c/o NGK Spark Plug Co., Ltd., Nagoya-shi, Aichi 467-0872 (JP); NAKAGAWA, Shinichi, c/o NGK Spark Plug Co., Ltd., Nagoya-shi, Aichi 467-0872 (JP); KOJIMA, Takio, c/o NGK Spark Plug Co., Ltd., Nagoya-shi, Aichi 467-0872 (JP); KOYAMA, Yuichi, c/o NGK Spark Plug Co., Ltd., Nagoya-shi, Aichi 467-0872 (JP); OSHIMA, Takafumi, c/o NGK Spark Plug Co., Ltd., Nagoya-shi, Aichi 467-0872 (JP)
(74) Representative: Grünecker Patent- und Rechtsanwälte PartG mbB
(86) International application number: PCT/JP2003/015098
(87) International publication number: WO 2004/048957

(56) References cited:
- EP-A- 0 230 104
- DE-A1- 4 445 359
- JP-A- 2 263 148
- JP-A- 3 059 450
- JP-A- 5 045 321
- JP-A- 7 140 101
- JP-A- 7 198 646
- JP-A- 63 008 548
- JP-A- 2000 258 374
- JP-A- 2000 298 108
- US-A1- 5 545 300
- E. ZAMPICENI ET AL.: "Thermal Treatment Stabilization Processes in SnO2 Thin Films Catalyzed With Au and Pt" IEEE SENSORS JOURNAL, vol. 2, no. 2, April 2002 (2002-04), pages 102-106, XP002425000
- NELLI P ET AL: "The aging effect on SnO2-Au thin film sensors: electrical and structural characterization" THIN SOLID FILMS, ELSEVIER-SEQUOIA S.A. LAUSANNE, CH, vol. 371, no. 1-2, 1 August 2000 (2000-08-01), pages 249-253, XP004222549 ISSN: 0040-6090

## Description

### Technical Field

The present invention relates to an oxidizing gas sensor. More particularly, the invention relates to an oxidizing gas sensor excellent in sensitivity to an oxidizing gas.

### Background Art

In the prior art of a gas sensor with a gas sensing element containing gold, a nitrogen oxide gas sensor element with a gas sensing element in which gold is homogeneously dispersed in a tin oxide layer has been disclosed.

The detecting principle of the gas sensor using an oxide semiconductor as a sensitive layer is that gas is detected by the change in resistance caused by the transfer of electrons in the surface layer of the sensitive layer. However, the structure of the gas sensing element in which the gold is homogeneously dispersed in the tin oxide layer has low sensitivity because little gold exists in the surface layer of the tin oxide layer. Moreover, most of the gold dispersed in the tin oxide layer makes no contribution to the gas detection. The amount of the gold having no effect on gas detection adds that much more to the cost of the gas sensing element.

The following documents disclose relevant prior art to this invention:
- D1:: E. Zampiceni et al., "Thermal Treatment Stabilization Processes in SnO2 Thin Films Catalyzed With Au and Pt", IEEE SENSORS JOURNAL 2 (April 2002) 102 - 106
- D2:: P. Nelli et al., "The aging effect on SnO2 - Au thin film sensors: electrical and structural characterization", THIN SOLID FILMS 371 (2000) 249 - 253
- D3:: DE 44 45 359 A1
- D4:: EP 0 230 104 A2
- D5:: US 5 545 300
- D6:: JP 63 008 548
- D7:: JP 7 140 101

Documents D1, D2 and D3 disclose gas sensors in which a tin oxide film is arranged on one side of an insulating alumina substrate. Electrodes are connected to the tin oxide film for measurement purposes. The tin oxide layers disclosed in documents D1 and D2 are covered with a noble metal layer comprising gold, while the tin oxide layer disclosed in document D3 is doped with noble metals.

Documents D4 and D5 disclose gas sensors which are disposed on a silicon substrate.

The tin oxide film disclosed in document D4, covered with a palladium-gold layer, is disposed on a silicon dioxide layer. A heater is disposed between the underlying silicon dioxide layer and a second silicon dioxide layer. An extra boron-doped silicon layer is disposed beneath the aforementioned layers and the silicon substrate, forming an etch-stop layer for anisotropic silicon etching.

The tin oxide film disclosed in document D5 is disposed on a silicon nitride layer. Sensing electrodes are disposed between said silicon nitride layer and glass layer under the silicon nitride layer. The glass layer is disposed on a second silicon nitride layer, forming an etch-stop layer that is arranged on top of a silicon substrate.

Both substrates of the gas sensors of documents D4 and D5 comprise a recess on the respective back surface.

Documents D6 discloses a gas sensor for sensing hydrocarbons such as methane and comprising a metal oxide film on the surface of an insulating substrate wherein said metal oxide film has a vertically columnar crystal structure wherein said columnar crystals have a diameter of 0.001 to 10 micrometers.

Document D7 describes an incomplete combustion gas sensor for sensing carbon monoxide and hydrogen comprising a thin film of columnar tin oxide crystals, a catalyst layer which comprises an ultra thin film of two kinds of noble metal and an oxidation/combustion layer which comprises a thick film of n-type metal oxide semiconductor carrying a noble metal.

### Summary of the Invention

The present invention has been conceived to solve the problems thus far described and has an object to provide an oxidizing gas sensor which is excellent in sensitivity to oxidizing gas.

The invention is defined by the subject matter of claim 1 and set forth in the dependent claim.

### Effects of the Invention

In the oxidizing gas sensor of the invention, the catalytic portion composed of 80 % mass or more of gold is formed on the surface of the sensitive layer composed of 90 % mass or more of tin oxide, so that the gas sensor is excellent in sensitivity to the oxidizing gas. Moreover, the gold in the catalytic portion is effectively utilized in the gas detection, thus providing a highly sensitive oxidizing gas sensor at a low cost.

The catalytic portion has a mass thickness of 0.008 to 170 nm, such that, it is possible to provide an oxidizing gas sensor which is more excellent in sensitivity to the oxidizing gas.

The catalytic portion is formed to cover 1.5 to 93 % of the area of the sensitive layer, when the gas sensing element is viewed in the direction passing through the thinnest dimension of said substrate such that it is possible to provide an oxidizing gas sensor which is especially excellent in sensitivity to the oxidizing gas.

The sensitive layer has a structure in which the columnar crystal grains of tin oxide agglomerate and in which the crystal grains have an average minor axis length of 7 to 65 nm, such that it is possible to provide an oxidizing gas sensor which is excellent in endurance and highly sensitive.

### Disclosure of the Invention

The invention will be described in detail in the following.

### 1. Structure of Gas Sensitive Element

### [1] Shape and Position of Gas Sensitive Element

The oxidizing gas sensor (as will be simply called the "gas sensor") of the invention has a gas sensing element (including a sensitive layer and a catalytic portion) generating an output signal which changes when an oxidizing gas to be detected is present.

Here, this oxidizing gas is a nitrogen dioxide gas. The oxidizing gas sensor of the invention is especially suitable for measuring and detecting the nitrogen dioxide gas.

Moreover, the gas sensing element has a sensitive layer of a thin film shape and a catalytic portion formed on the surface of the sensitive layer. Here, the gas sensing element is formed on a surface of a insulating layer which is formed on a surface of a substrate. Specifically, the substrate has an open space portion in which thickness is reduced, and the insulating layer is so formed on the surface of the substrate as to cover that open space portion. In the insulating layer at the position corresponding to the open space portion, moreover, there is formed a heating element for heating the gas sensing element which is formed on the surface of the insulating layer at a position corresponding to the heating element.

Here, the aforementioned position corresponding to the open space portion means the positional relation in which the heating element and the open space portion overlap in the direction through the thinnest dimension of the substrate. It is further preferred that the heating element lies in its entirety over the open space portion.

Moreover, the aforementioned position corresponding to the heating element means the positional relation, in which the gas sensing element and the heating element overlap at least partially when the gas sensing element and the heating element are viewed in the direction perpendicular to the surface of the insulating layer. It is preferred that the gas sensing element lies in its entirety over the heating element.

Moreover, the gas sensing element is not especially restricted in its plane shape, and may be a rectangular shape having chamfered corners, a generally circular shape or a generally elliptical shape. Of these, the rectangular shape having chamfered corners is preferred.

### [2] Sensitive Layer

The sensitive layer is a portion whose respective output signals when it is in contact with the oxidizing gas to be detected and when it is not in contact are different. This sensitive layer has a thin film shape.

Moreover, the sensitive layer may be exemplified in its plane shape by a rectangular shape having chamfered corners, a generally cylindrical shape or a generally elliptical shape, and the rectangular shape having chamfered corners is preferred.

Moreover, the sensitive layer is not especially restricted in its thickness but can be exemplified by 0.1 to 100,000 nm, preferably 100 to 1,000 nm. If less than 0.1 nm, the endurance is inferior. If more than 100,000 nm, on the other hand, it takes an impractically long time to form the sensitive layer and thus is not desirable. Herein, the thin film shape means that the sensitive layer has a thickness of 100,000 nm or less.

On the other hand, the major component being tin oxide as stated above means that the concentration of tin oxide is 90% mass or more, preferably 95% mass or more and more preferably

98% mass or more (including 100% mass) where the whole sensitive layer composition is 100% mass. If the content of the tin oxide in the sensitive layer is less than 90% mass, the sensitivity of the oxidizing gas sensor tends to be insufficient. Herein, the tin oxide is SnO₂-x (0 ^ X < 2). At this time, X preferably ranges from 0 to 1.5, and more preferably 0 to 1.0.

Further, the crystal structure of the tin oxide in the sensitive layer is made of an agglomerate of columnar crystal grains of tin oxide. However, the sensitive layer whose main structure is an agglomerate of the tin oxide microcrystals changes in its crystal structure when it is heated by the heating element for a long time. As a result, the gas sensor characteristics fluctuate, and endurance is low. On the other hand, a sensitive layer made of the agglomerate of the columnar crystal grains of tin oxide is stable in its crystal structure even if it is heated by the heating element for a long time. As a result, the gas sensor characteristics fluctuate less, and endurance is high. Therefore, the tin oxide is formed into an agglomerate of the columnar crystal grains.

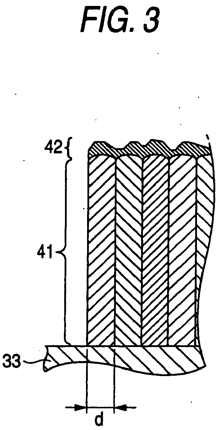

The aforementioned agglomerate of the columnar crystal grains of tin oxide is formed so that the columns are aligned in the direction normal to the insulating layer surface, as shown in Fig. 3.

This columnar crystal grain agglomerate can be confirmed by observing a section obtained by slicing the sensitive layer in the thickness direction of the substrate, magnified x500 , 000 by a transmission electron microscope.

The concentration of tin oxide crystals in the columnar agglomerate is usually 95% mass or more (including 100% mass) where the total mass of the tin oxide contained in the sensitive layer is ₁₀₀% mass, but concentration is not limited to this.

The average minor axis length (as indicated by d in Fig. 3 schematically presenting the minute structure of a section of the gas sensing element) of the columnar crystal grains is 7 to 65 nm, preferably 10 to 60 nm. By thus limiting the average minor axis length of the crystal grains of tin oxide, it is possible to provide a highly sensitive oxidizing gas sensor excellent in endurance.

Here, the aforementioned average minor axis length of the columnar crystal grains can be determined in the following manner.

A section which is obtained by slicing the sensitive layer in the direction of the thinnest dimension of the substrate is observed under magnification x500,000 by a transmission electron microscope (e.g., Type JEM-2010F of Nippon Denshi Kabushiki Geisha) so that its dark field image is obtained. The minor axis lengths of arbitrary columnar crystal grains in the dark field image obtained are measured, and their average is adopted as the average minor axis length.

No special limitation is made on the method of manufacturing the sensitive layer which is composed of that agglomerate of the columnar crystals of tin oxide. However, the sensitive layer can be manufactured by using a metal mask having the same opening as the shape of the desired sensitive layer and by depositing the composition of the sensitive layer at the desired portion of the surface of the insulating layer or the like.

### [3] Catalytic Portion

The catalytic portion is formed on the surface of the sensitive layer. The place where the catalytic portion is formed should not be limited to any position as long as it is on the surface of the sensitive layer. For example, the catalytic portion may be formed exclusively on the surface of the sensitive layer opposite to the surface contacting the insulating layer, as shown in Fig. 2, or may be formed to also cover the side surfaces of the sensitive layer, as shown in Fig. 4. Further, the catalytic portion must have gas permeability. This gas permeability means that the oxidizing gas to be detected permeates to the surface of the sensitive layer. The method for forming the gas-permeable catalytic portion is not limited, and may be exemplified by a method forming the catalytic portions into island shape, as shown in Fig. 5.

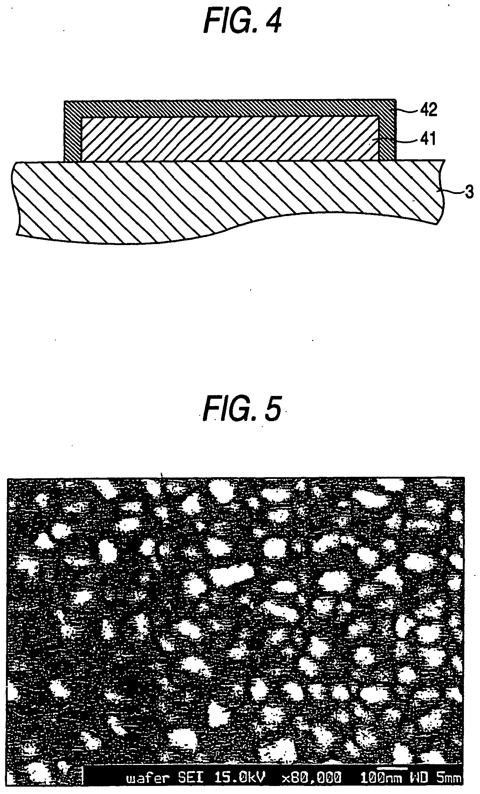

The aforementioned island shape means the shape in which island-shaped grains (i.e., white portions in Fig. 5, hereafter called "island-shaped grains") composed of 80 % mass or more of gold (Au) are scattered on the surface of the sensitive layer (i.e., black portions in Fig. 5). The average of the maximum sizes of one island-shaped grain in a planar direction is 2 micrometers or less, preferably 1 micrometer or less. On the other hand, the average of the maximum size in the cross sectional direction can be ₁₀ nm or more, preferably ₂₀ nm or more.

On the other hand, the mass thickness of the catalytic portion is 0.008 to 170 nm, preferably 0.01 to 165 nm, more preferably 0.03 to 80 nm. If the mass thickness of the catalytic portion is 0.008 to 170 nm, a gas sensing element having sufficient sensitivity to the oxidizing gas and a catalytic portion having a sufficient gas-permeability can be formed, and thus this thickness is advantageous.

Here, the mass thickness of the gold of the catalytic portion can be determined in the following manner.

At first, the gas sensing element is analyzed in the depth direction to obtain a profile of the various depths by an Auger electron spectroscopic analyzer (i.e., Field Emission Auger Microprobe: Type JAMP-7830F of Nippon Denshi Kabushiki Gaisha). At this time, the electron beam diameter is so set as to irradiate the gas sensing element as a whole with the electron beam. With the profile of the various depths obtained, the dependence of distribution of gold at various depths on the etching time period can be found. Next, the etching rate of SiO, is measured by employing a SiO, sample having a known film thickness. The etching rate of gold in a bulk shape is then determined by converting the etching rate of the SiO, measured. After this, the mass thickness of the gold is calculated from the etching rate of gold obtained and the etching time found initially.

Moreover, the above condition "composed of 80 % mass or more of gold" means that the concentration of gold is 80% mass or more (including the case of ₁₀₀% mass) where the total mass of the catalytic portion is ₁₀₀% mass.

The area ratio of the sensitive layer covered by the catalytic portion, where the area of the sensitive layer is ₁₀₀% (also called the "distribution percentage of the catalytic portion") is 1.5 to 93% when the gas sensing element is viewed in the direction passing through the thinnest dimension of the substrate. If the ratio of the area covering the sensitive layer is 1.5 to 93%, the sensitivity to the oxidizing gas is sufficient and the gas-permeability of the catalytic portion doesn't become low, and thus is advantageous.

Here, the area ratio (or distribution percentage) of gold can be determined in the following manner.

A reflected electron image is obtained by irradiating the upper portion of the gas sensing element with an electron beam in the direction passing through the thinnest dimension of the substrate by using a scanning type electron microscope (e.g. , Type JSM-6330F of Nippon Denshi Kabushiki Geisha). The reflected electron image obtained is an image in which gold is brighter than tin oxide. The area ratio (or distribution percentage) of gold on the surface of the sensitive layer is determined by processing the image of the reflected electron image obtained on the basis of the brightness.

The method of forming the catalytic portion is not especially limited, but the catalytic portion can be formed by depositing the component for the catalytic portion on the surface of the sensitive layer and the insulating layer and then by etching the unnecessary portions.

### 2. Structures of Portions Other than Gas Sensing

### Element of Oxidizing Gas Sensor

### [1] Substrate

The oxidizing gas sensor of the invention is provided with the substrate. The material composing the substrate is usually a semiconductor, although not limited thereto. Of these materials, silicon is most frequently employed. The planar shape of the substrate is not limited and can be made into rectangular, circular, and other shapes. The size is not limited either, but preferably has a length of 0.1 to 10 mm and a width of 0.1 to 10 mm in case the shape is rectangular. In case the shape is circular or the like, the substrate preferably has an area equivalent to that of the rectangle. Moreover, the substrate preferably has a thickness of 400 to 500 micrometers, although not limited thereto.

The substrate is further provided with the open space portion. This open space portion is a portion where the substrate is partially cut away, reducing the thickness. This cut-away portion can be a through cavity (hereafter "cavity") which is opened both in the upper and lower surfaces of the substrate, or a recess which is opened in either the upper or the lower surfaces of the substrate. Of these, the cavity is preferred.

No special limitation is made to the shape of the opening or the internal shape of the open space portion. However, the open shape is usually simple, for instance a rectangle or a circle.

Moreover, the size of the open space portion is not especially limited. In case the open space portion is a cavity, however, it is preferred that one of the two openings is formed to have a larger open area. At this time, the larger one has an open area of 0.01 to 4 mm², preferably 0.25 to 2 mm². In case the open space portion is a recess, on the other hand, the open area can be within a range like that of the aforementioned cavity.

The method for forming the open space portion is not especially limited either, but the open space portion can be formed by etching off a portion of the substrate. The etching method to be used is not especially limited, and may be the wet etching method or the dry etching method (both being either anisotropic or isotropic etching). Of these, the wet etching method using an anisotropic etching liquid is generally used in case the aforementioned cavity is to be formed.

### [2] Insulating Layer

In the oxidizing gas sensor of the invention, the insulating layer is formed on the surface of the aforementioned substrate. This insulating layer is a layer for insulating the later-described electrodes electrically from the substrate. This insulating layer is formed on the surface of the substrate so as to cover the opening of the open space portion formed in the substrate and to be supported by the substrate.

The insulating layer may be formed over the whole substrate or only part of the substrate, as long as it covers the opening of the open space portion and is supported by the substrate.

Usually, the insulating layer is formed to cover the opening as a whole. However, the insulating layer may be formed to cover only a portion of the opening if the insulating layer can be supported by the substrate.

The aforementioned word "supported" means that the insulating layer is supported by the substrate surface so as to cover the opening of the open space portion.

The material of the insulating layer is not especially limited as long as the material has an insulating property, and may be a silicon compound such as SÎ₀₂, S₁₃N₄ and SiOₓN_{y}. Moreover, the insulating layer is not limited in its shape and thickness, and may be a single layer or a plurality of layers.

The forming method of the insulating layer is not especially limited and can be, for example, a thermal-oxidation method modifying the surface of the substrate. Moreover, the insulating layer can be obtained by depositing the components thereof on the surface of the substrate. Still moreover, the insulating layer can be obtained by adhering a previously prepared insulating layer to the surface of the substrate.

### [3] Heating Element

The oxidizing gas sensor of the invention is provided with the heating element in the insulating layer. This heating element generates heat when fed with a voltage, and rises to a high temperature. The heating element activates the gas sensing element with its heat so that the measurement can be made.

Moreover, the heating element is usually connected with leads for feeding it with the electric power from an external circuit.

The heating element is arranged in the insulating layer and at a position corresponding to the open space portion of the substrate. The heat generated by the heating element can be prevented from dissipating from the heating element through the substrate when it is arranged at a position corresponding to the open space portion. Moreover, the heating element can transmit the heat efficiently to the gas sensing element to raise the temperature of the gas sensing element more quickly and to control the temperature more precisely. Here, the aforementioned position corresponding to the open space portion means the positional relation, in which the heating element and the open space portion at least partially overlap in the direction passing through the thinnest dimension of the substrate. In this case, the heating element lies in its entirety over the open space portion.

The material for the heating element is not especially limited, as long as it has conductivity, but can be exemplified by pure platinum, a platinum alloy, a nickel alloy, a chromium alloy or a nickel-chromium alloy. Of these, pure platinum or the nickel-chromium alloy is preferably used because it has a large resistance-temperature coefficient so that its resistance and resistance-temperature coefficient hardly change even when it is repeatedly used for a long time. Moreover, the heating element is not limited to a single layer structure but may be plural layers. A plural-layered heating element can be prepared, for example, by forming a Ta layer (having a thickness of 10 to 40 nm, for example) and then by forming a Pt layer (having a thickness of 150 to 350 nm, for example) .

Although the method for forming the heating element is not especially limited, the heating element can be formed in the insulating layer by depositing a predetermined material on the surface of the insulating layer, and then removing the unnecessary portions by various etching methods as in the above open space portion forming process, and further by depositing another insulating layer on that upper surface.

### [4] Electrodes

The oxidizing gas sensor of the invention is provided with electrodes to contact with the aforementioned sensitive layer. The electrode pair contacts the sensitive layer so as to apply voltage to the sensitive layer and to extract output signals. The electrodes are preferred to have a film thickness of equal to or less than that of the sensitive layer. This is because it is possible that the sensitive layer cannot be formed as a continuous layer if the electrodes have a larger film thickness than that of the sensitive layer.

The material for the electrodes are not especially limited as long as it has a high conductivity, and can be Pt, Au, or Al, of which Pt is most desired. It is acceptable to use one exclusively or two or more together. Moreover, the electrodes should not be limited to a single layer structure but may be a plurality of layers. Such plural-layered electrodes can be prepared by forming a Ti layer (having a film thickness of 10 to 40 nm, for example) and then by forming a Pt layer (having a film thickness of 10 to 70 nm, for example). The method for forming the electrodes is not especially limited, and the electrodes can be obtained by depositing a predetermined material on the insulating layer.

### Brief Description of the Drawings

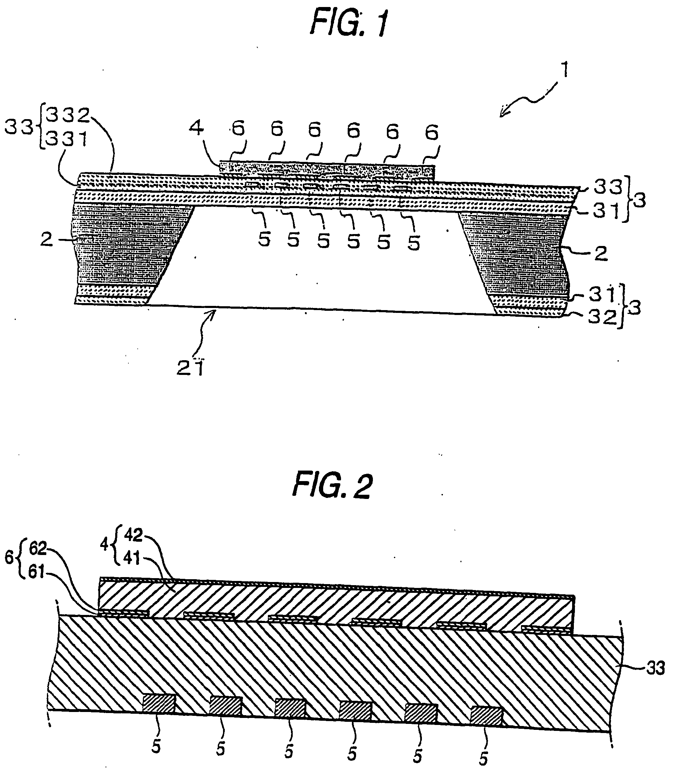

Fig. 1 is a schematic diagram presenting a section of an oxidizing gas sensor of an embodiment.
Fig. 2 is a schematic diagram presenting a section of the oxidizing gas sensor including a gas sensing element, of the embodiment.
Fig. 3 is a schematic diagram presenting one example of a microstructure of a section of the gas sensing element in the invention.
Fig. 4 is a schematic diagram showing a sectional shape of a gas sensing element of another mode of the invention.
Fig. 5 is an explanatory view through an electron microscope of a plane of the gas sensing element of the oxidizing gas sensor of the embodiment.

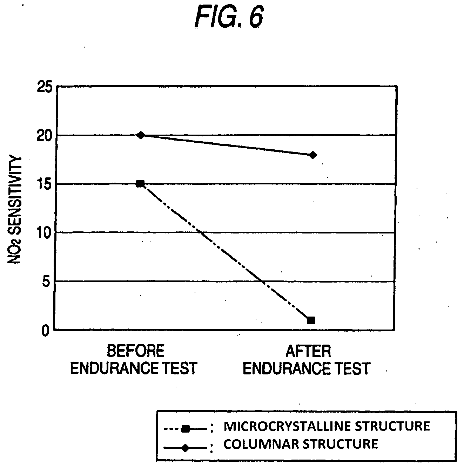

Fig. 6 is a graph plotting the changes in NO₂ sensitivity before and after endurance tests of the cases, in the case where tin oxide crystals have a columnar structure and a microcrystalline structure.

### Best Mode for Carrying Out the Invention

The invention will be described in detail in connection with its embodiment.

### Embodiment

### [1] Construction of Oxidizing Gas Sensor of Embodiment

The gas sensor of the embodiment is described on its construction. This gas sensor has dimensions (length x width) of 3 mm X 5 mm.

The gas sensor 1 is constructed to have insulating layers 3 formed on the top and bottom surfaces of a silicon substrate 2 (as will be shortly called the "substrate 2"), as shown in Fig. 1. The insulating layers 3 are composed of an insulating layer 31 made of silicon oxide (SiO₂), and insulating layers 32 and 33 made of silicon nitride (Si₃N₄) and laid over the insulating layer 31.

Moreover, this substrate 2 has an open space portion 21 formed so that it is opened at its upper surface on the side where the insulating layer 32 is formed. This opening in the open space portion 21 has an area of 1 mm². In the insulating layer 33, a heating element 5 is formed over the open space portion 21. With this heating element 5, although not shown, there are connected lead portions for feeding the electric power. These lead portions have contacts for connections with an external circuit. These heating portions and their leads are made to have a two-layered structure composed of a Pt layer and a Ta layer.

As shown in Fig. 2, a pair of electrodes 6 is formed on the surface of the insulating layer 33 so as to be positioned over the heating element 5. A gas sensing element 4 is also formed on the surface of the insulating layer 33 over the heating element 5. Moreover, the gas sensing element 4 is formed on the surface of the insulating layer 33 so as to contact with the upper faces of the electrodes 6. To these paired electrodes 6, although not shown, there are connected electrode lead portions which have electrode contacts for connections with an external circuit.

The electrodes 6 are composed of a lower layer electrode 61, formed of Ti and positioned over the insulating layer 33, and an upper layer electrode 62 formed of Pt and positioned over the lower layer electrode 61. Here, the lower layer electrode 61 has a film thickness of 20 nm, and the upper layer electrode 62 has a film thickness of 40 nm.

The gas sensing element 4 is composed of a sensitive layer 41 made mainly of tin oxide (99% mass or more where the whole layer composition is 100% mass), and a catalytic portion 42 made of Au. On the other hand, the gas sensing element 4 is formed into a square planar shape having chamfered corners.

### [2] Manufacture of Gas Sensor

The gas sensor of the embodiment was manufactured by the following process.

### (1) Rinsing of Silicon Substrate

First of all, a silicon substrate (having a thickness of 400 micrometers) for the substrate 2 was immersed in a rinsing liquid and subjected to a rinsing treatment.

### (2) Formation of Insulating Layer 31

The silicon substrate was put into a heat treatment furnace and subj ected to a thermal-oxidation treatment to form a silicon oxide film as the insulating layer 31 having a film thickness of 100 nm all over the substrate 2.

### (3) Formation of Insulating Layers 32 and 33 and

Heating Element 5 (Including Heating Element Leads)

By a plasma CVD using SiH₄ and NH₃ as a source gas , a silicon nitride film was formed as the insulating layer 32 (having a film thickness of 500 nm) on one face of the substrate 2, and a silicon nitride film (having a film thickness of 200 nm) was formed as a lower insulating layer 331 (see Fig. 1), i.e. , the lower half of the insulating layer 33 on the other face. By using a DC sputtering apparatus, a Ta layer (having a film thickness of 25 nm) was then formed as the lower layer of the heating element 5 on the surface of that lower insulating layer 331, and a Pt layer (having a film thickness of 250 nm) was formed as the upper layer of the heating element 5 on the surface of that Ta layer. After the sputtering treatment, the resist was patterned by a photolithography, and the pattern of the heating element 5 was formed by etching treatment. Next, an upper insulating layer 332 (having a film thickness of 500 nm, as shown in Fig. 1) which is the upper half of the insulating layer 33 was then formed by a method like the aforementioned one. Thus, the insulating layers 32 and 33 and the heating element 5 arranged in the insulating layer 33 were formed.

### (4) Formation of Contacts for Heating Element

Next, the insulating layer 33 was etched by a dry etching method to form hole portions exposing the heater contacts to the outside. After this, the Ti layer (having a thickness of 20 nm) and then the Pt layer (having a thickness of 40 nm) were formed by using the DC sputtering apparatus. After these sputtering treatments, the resist was patterned by the photolithography to form the contacts for the heating elements.

### (5) Formation of Electrodes (6) (Including Electrode Leads and Electrode Contacts)

By using the DC sputtering apparatus, the Ti layer (having a thickness of 20 nm) was formed for the lower layer electrode 61, and the Pt layer (having a film thickness of 40 nm) was then formed for the upper layer electrode 62. After these sputtering treatments, the resists were patterned by the photolithography, and the upper layer electrode 62, the lower layer electrode 61, and the not-shown electrode leads and electrode contacts were formed.

### (6) Formation of Contact Pads

After finishing the aforementioned steps, the DC sputtering apparatus was applied to the substrate to form the Cr layer (having a film thickness of 50 nm) for the lower layer of contact pads and then the Au layer (having a film thickness of 1 micron) for the upper layer of the contact pads. After these sputtering operations, the resist was patterned by the photolithography and individual contact pads were formed over the not-shown contacts for the electrodes and the heating element by the etching treatment.

### (7) Formation of Open space Portion 21

After the substrate has finished the foregoing steps, it was immersed in a TMAH solution and was subjected to an anisotropic etching of silicon so that the open space portion 21 was formed at a position corresponding to the heating element 5, with its open face at the insulating layer 32.

### (8) Formation of Gas Sensing Element 4

After this, an RF sputtering apparatus was used to form the gas sensing element 4 on the upper surface of the insulating layer 33 at a position corresponding to the heating element 5 and the open space portion 21. Specifically, a metal mask was used to form a tin oxide layer (having a film thickness of 200 nm) on the surface of the insulating layer 33 to be the sensitive layer 41, and then the Au layer on the surface of the tin oxide layer to be the catalytic portion 42. Here, the tin oxide layer and the Au layer were formed by a method in which the substrate was heated to 350 °C to 500 °C (the thermal-sputtering method),and by a method in which the tin oxide layer and the Au layer were formed on the substrate at the room temperature and in which the tin oxide layer and the Au layer were then heated and annealed at 350 °C to 700 °C for 3 hours(the room-temperature sputtering method). The film thickness of the Au layer was varied by varying the time period for film formation. By varying the substrate heating temperature or the heating-annealing temperature, moreover, the tin oxide layer was formed to have either a columnar structure or a microcrystalline structure. In the case where the tin oxide layer has columnar structure, moreover, the columnar crystals were varied in their minor axis length by varying the heating temperature or the heating-annealing temperature of the substrate.

### Comparison Example (Gas Sensor Having Au Homogeneously Dispersed in Sensitive Layer)

A SnO₂ target and an Au target were simultaneously sputtered to form a sensitive layer, in which the Au was homogeneously dispersed in the tin oxide layer. A gas sensor was manufactured like that of the above Embodiment, but with the simultaneous sputtering.

### Performance Evaluations

(1) Comparisons between the gas sensor (Comparison Example) having the gas sensing element made of the tin oxide layer, in which the Au was homogeneously dispersed, and the gas sensor of the Embodiment:
In the gas sensors of Comparison Example and in the gas sensors in which the catalytic portions had a mass thickness of 4 nm of the Embodiment, the NO₂ sensitivities in the case of the NO₂ concentration of 1 ppm were measured using the base gas having a temperature of 25 °C, a composition of O₂: 20.9 % and N₂: the remainder, and a relative humidity of 40 %, and are enumerated in Table 1. Here, the sensitivities of NO₂ for the NO₂ concentration of x ppm are the ratios (R_{g}/Rₐᵢᵣ) between the resistance R_{g} of the case of the NO₂ concentration of x ppm to the resistance Rₐᵢᵣ of the case of the NO₂ concentration of 0 ppm. At this time, the heating element had a temperature of 250 °C.

**Table 1**

| | Gas Sensing Element | NO₂ Sensitivity |
|---|---|---|
| Embodiment | Two-Layered Structure | 20 |
| Comparison | Au Dispersed | 1 |

(2) Relations among the mass thicknesses of the catalytic portion, the distribution percentage of the catalytic portion, and the NO₂ sensitivity:
Using gas sensors of the embodiment with the mass thicknesses of the catalytic portions and the distribution percentages as in Test Examples 1 to 18 of Table 2, the NO₂ sensitivities of the case of the NO₂ concentration of 1 ppm were measured, and the evaluation results are enumerated in Table 2. At this time, the heating element had a temperature of 250 °C. The base gas used at this time was identical to that of (1).

**Table 2**

| | Au Mass Film Thickness (nm) | Distribution of Au (%) | NO₂ Sensed | Method of GSE |
|---|---|---|---|---|
| TE1 | 0.005 | 97 | 3 | H-Spt |
| TE2 | 0.01 | 1 | 5 | RT-Spt |
| TE3 | 0.01 | 90 | 8 | H-Spt |
| TE4 | 0.03 | 85 | 16 | H-Spt |
| TE5 | 0.05 | 2 | 25 | RT-Spt |
| TE6 | 0.1 | 90 | 20 | H-Spt |
| TE7 | 0.1 | 24 | 24 | RT-Spt |
| TE8 | 3 | 91 | 30 | H-Spt |
| TE9 | 4 | 36 | 20 | RT-Spt |
| TE10 | 4.5 | 92 | 40 | H-Spt |
| TE11 | 5.4 | 80 | 30 | RT-Spt |
| TE12 | 14 | 90 | 35 | H-Spt |
| TE13 | 48 | 80 | 27 | H-Spt |
| TE14 | 80 | 85 | 15 | H-Spt |
| TE15 | 82.8 | 75 | 10 | H-Spt |
| TE16 | 165 | 80 | 8 | RT-Spt |
| TE17 | 165 | 95 | 5 | H-Spt |
| TE18 | 250 | 99 | 2 | H-Spt |

| | | | | |
|---|---|---|---|---|
| In Table 2: TE: Test Example NO₂ Sensed: NO₂ Sensitivity Method of GSE: Method for Forming Gas Sensing Element H-Spt: Thermal-Sputtering Method RT-Spt: Room-Temperature Sputtering Method | | | | |

(3) Both the gas sensor of the Embodiment having a sensitive layer in which the crystal structure of tin oxide has columnar structure, and that which has microcrystalline structure, were constructed. In all these gas sensors, an Au layer having the mass thickness of 4 nm was formed on the surface of the sensitive layer.
The NO₂ sensitivity of these sensors was measured in the case where the NO₂ concentration was 1 ppm. The heat-resistance endurance tests were performed, and the NO₂ sensitivities of the case of NO₂ concentration of 1 ppm were measured and compared before and after the tests. Here, microcrystalline structure means a crystal structure in which the crystals are so small that they cannot be identified even when a section of the sensitive layer is observed at a magnification of x500,000 by a transmission type electron microscope. On the other hand, the heat-resistance endurance tests were performed with the gas sensor in the atmosphere, the heating element being connected for 1,000 hours so that its temperature was constant at 350 °C. Here, the heating element at the time of measuring the NO₂ sensitivity was 250 °C. The base gas employed at the NO₂ sensitivity measurement time was identical to that of (1).

**Table 3**

| | NO₂ sensitivity Before Tests | NO₂ sensitivity After Tests |
|---|---|---|
| Columnar Structure | 20 | 18 |
| Microcrystal Structure | 15 | 5 |

(4) Relations between the average minor axis length of the tin oxide crystal grains of the columnar structure and the NO₂ sensitivity:
Using the gas sensors belonging the embodiment and having for the sensitive layer tin oxide crystal grains of the columnar structure with average minor axis lengths as shown in Test Examples 19 to 26 of Table 4, the NO₂ sensitivities in the case where the NO₂ concentration is 1 ppm were measured, and the evaluation results are enumerated in Table 4. The heating element had a temperature of 250 °C. The base gas used at this time was identical to (1). Moreover, the individual gas sensors of Test Examples 19 to 26 had an Au layer formed on the surface of the sensitive layer with mass thickness of 4nm and distribution percentage of 36%.

**Table 4**

| | AMAL (nm) of SnO₂ | NO₂ Sensed | Filming Condition |
|---|---|---|---|
| TE19 | 2 | 2 | H-Spt (Substrate Temp.:500 °C) |
| TE20 | 5 | 4 | H-Spt (Substrate Temp.:450 °C) |
| TE21 | 10 | 15 | H-Spt (Substrate Temp. :350 °C) |
| TE22 | 15 | 45 | RT-Spt (Annealing:350 °C) |
| TE23 | 30 | 35 | RT-Spt (Annealing:400 °C) |
| TE24 | 60 | 20 | RT-Spt (Annealing:500 °C) |
| TE25 | 70 | 4 | RT-Spt (Annealing:600 °C) |
| TE26 | 80 | 2 | RT-Spt (Annealing:700 °C) |

| | | | |
|---|---|---|---|
| In Table 4: AMAL: Average Minor Axis Length TE: Test Example NO₂ Sensed: NO₂ Sensitivity H-Spt: Thermal-Sputtering Method RT-Spt: Room-Temperature Sputtering Method | | | |

### Effects of Embodiment

As seen in Table 1, in the case (Comparison Example) of the gas sensor with no catalytic portion but rather simply a gas sensing element formed from a tin oxide layer with dispersed Au, the NO₂ sensitivity of the case of the NO₂ concentration of 1 ppm is 1. In the case (Embodiment) in which the catalytic portion made of Au was formed on the surface of the sensitive layer, it is found that the NO₂ sensitivity for the NO₂ concentration of 1 ppm is as high as 20.

In the case (Test Example 18) in which the mass thickness of the Au layer is 250 nm, it was found that the NO₂ sensitivity for the NO₂ concentration of 1 ppm is as low as 2, as seen in Table 2. This is likely because in this case the Au layer or the catalytic portion has low gas permeability. In the case (Test Example 1) in which the mass thickness of the Au layer is 0.005 nm, on the other hand, it is found that the NO₂ sensitivity for the NO₂ concentration of 1 ppm is 3, slightly higher, than that of Test Example 18 having excessive Au layer thickness, although not sufficient. This is likely because the Au layer thickness is so small that the catalyst has insufficient effect. In the cases (Test Examples 2 to 17) in which the mass thickness of the Au layer is 0.01 to 16 nm, on the contrary, it is found that the NO₂ sensitivity for the NO₂ concentration of 1 ppm is 5 or higher, indicating that the gas sensors have high sensitivities. In the cases (Test Examples 3 to 16) in which the Au distribution percentage is 2 to 92%, it is found that the NO₂ sensitivity for the NO₂ concentration of 1 ppm is 8 or higher, indicating that the gas sensors have outstanding sensitivities. In the cases (Test Examples 4 to 14) in which mass thickness of Au layer is 0.03 to 80 nm and in which the Au distribution percentage is 2 to 92 %, it is found that the NO₂ sensitivity for the NO₂ concentration of 1 ppm is 15 or more, an especially high sensitivity.

As seen in Table 3 and Fig. 6, in the case of the sensitive layer in which the crystal structure of the tin oxide is the columnar structure, it was found that the NO₂ sensitivity for the NO₂ concentration of 1 ppm is 20 before the heat-resistance endurance test and 18 after the heat-resistance endurance test. The sensitivity hardly drops at all, indicating excellent endurance. In the case of the sensitive layer in which the crystal structure of the tin oxide is the microcrystalline structure, on the contrary, it is found that the NO₂ sensitivity for the NO₂ concentration of 1 ppm is 15 before the heat-resistance endurance test and 5 after the heat-resistance endurance test. The sensitivity seriously drops , indicating endurance inferior to that of the sensitive layer whose tin oxide has a columnar structure.

In the cases (Test Examples 25 and 26), in which the average minor axis lengths of the crystal grains of the tin oxide of the columnar structure are 70 nm and 80 nm, respectively, according to Table 4, it is found that the NO₂ sensitivities for the NO₂ concentration of 1 ppm are 4 and 2, respectively, showing that neither has sufficient sensitivity. This is likely because the surface area of the sensitive layer becomes smaller as the average minor axis becomes longer, so that the area of contact with the detected gas decreases. In the cases (Test Examples 19 and 20), in which the average minor axis lengths of the crystal grains of the tin oxide are 2 nm and 5 nm, respectively, on the other hand, it is found that the NO₂ sensitivities where the NO₂ concentration is 1 ppm are 2 and 4, respectively, and are as insufficient as those of Test Examples 25 and 26 having the larger average minor axis lengths. In the cases (Test Examples 21 to 24), in which the average minor axis lengths of the crystal grains of the tin oxide are 10 to 60 nm, on the contrary, it is found that the NO₂ sensitivities for the NO₂ concentration of 1 ppm are 15 to 45. Especially in the cases (Test Examples 22 and 23), in which the average minor axis lengths of the crystal grains of the tin oxide are 15 nm and 30 nm, respectively, it is found that the NO. sensitivities for the NO. concentration of 1 ppm are 35 and 45, respectively.

Here, the present invention should not be limited to the disclosure of the specific embodiments thus far described but can be modified into various embodiments within the scope of the claims in accordance with its object and application. In the embodiment, for example, the catalytic portion is formed on the upper face of the sensitive layer, but its place is not especially restricted as long as it is on the surface of the sensitive layer.

## Claims

1. An oxidizing gas sensor (1) for sensing nitrogen dioxide comprising:
a substrate (2) having an open space portion (21) in which the thickness is reduced;
an insulating layer (3) formed on the surface of said substrate (2) so as to cover said open space portion (21) ;
a heating element (5) formed in said insulating layer (3) at a position corresponding to said open space portion (21) ;
a gas sensing element (4) formed on the surface of said insulating layer (3) at a position corresponding to said heating element (5) ; and
a pair of electrodes (6) disposed to contact said gas sensing element (4), wherein
said gas sensing element (4) includes a sensitive layer (41) composed of 90% mass or more of tin oxide, and a gas-permeable catalytic portion (42) formed of 80% mass or more of gold at least on a portion of the surface of said sensitive layer (41) and having gas permeability,
said catalytic portion (42) has a mass thickness of 0.008 to 170 nm,
said catalytic portion (42) is formed to cover 1.5 to 93 % of the area of said sensitive layer (41) viewing the gas sensing element (4) is in the direction passing through the thinnest dimension of said substrate (2),
the average of the maximum sizes of one grain of said catalytic portion (42) in a planar direction is 2 micrometers or less,
the structure of said sensitive layer (41) is an agglomerate of tin oxide columnar crystal grains; and
said crystal grains have an average minor axis length (d) of 7 to 65 nm.

2. An oxidizing gas sensor (1) as set forth in claim 1, **characterized in that** the heating element (5) is formed in a silicon nitride insulating layer (33) enclosed between an upper half (332) and a lower half (331) of the silicon nitride insulating layer (33) at a position corresponding to said open space portion (21).

## Patentansprüche

1. Oxidationsgassensor (1) zum Erfassen von Stickstoffdioxid, umfassend:
ein Substrat (2), das einen offenen Raumteil (21) mit einer reduzierten Dicke aufweist,
eine isolierende Schicht (3), die auf der Oberfläche des Substrats (2) ausgebildet ist, um den offenen Raumteil (21) zu bedecken,
ein Heizelement (5), das in der isolierenden Schicht (3) an einer Position in Entsprechung zu dem offenen Raumteil (21) ausgebildet ist,
ein Gaserfassungselement (4), das auf der Oberfläche der isolierenden Schicht (3) an einer Position in Entsprechung zu dem Heizelement (5) ausgebildet ist, und
ein Paar von Elektroden (6), die angeordnet sind, um das Gaserfassungselement (4) zu kontaktieren, wobei:
das Gaserfassungselement (4) eine empfindliche Schicht (41), die zu 90 Massenprozent oder mehr aus Zinnoxid besteht, und einen gasdurchlässigen katalytischen Teil (42), der zu 80 Massenprozent oder mehr aus Gold wenigstens an einem Teil der Oberfläche der empfindlichen Schicht (41) ausgebildet ist und eine Gasdurchlässigkeit aufweist, umfasst,
der katalytische Teil (42) eine Massendicke von 0,008 bis 170 nm aufweist,
der katalytische Teil (42) ausgebildet ist, um 1,5 bis 93 % der Fläche der empfindlichen Schicht (41) zu bedecken, wenn das Gaserfassungselement (4) in der Richtung durch die dünnste Dimension des Substrats (2) betrachtet wird,
der Durchschnitt der maximalen Größen der Körner des katalytischen Teils (42) in einer planaren Richtung bei 2 Mikrometer oder weniger liegt,
der Aufbau der empfindlichen Schicht (41) ein Agglomerat aus säulenförmigen Zinnoxid-Kristallkörnern ist, und
die Kristallkörner eine durchschnittliche Länge (d) der kleinen Achse von 7 bis 65 nm aufweisen.

2. Oxidationsgassensor (1) nach Anspruch 1, **dadurch gekennzeichnet, dass** das Heizelement (5) in einer Siliziumnitrid-Isolationsschicht (33) ausgebildet ist, die zwischen einer oberen Hälfte (332) und einer unteren Hälfte (331) der Siliziumnitrid-Isolationsschicht (33) an einer Position in Entsprechung zu dem offenen Raumteil (21) eingeschlossen ist.

## Revendications

1. Détecteur de gaz oxydant (1) pour détecter du dioxyde d'azote, comprenant :
un substrat (2) comportant une partie d'espace ouvert (21) dans lequel l'épaisseur est réduite ;
une couche d'isolation (3) formée sur la surface dudit substrat (2) de façon à recouvrir ladite partie d'espace ouvert (21) ;
un élément chauffant (5) formé dans ladite couche d'isolation (3) dans une position correspondant à ladite partie d'espace ouvert (21) ;
un élément de détection de gaz (4) formé sur la surface de ladite couche d'isolation (3) dans une position correspondant audit élément chauffant (5) ; et
une paire d'électrodes (6) disposées de façon à être en contact avec ledit élément de détection de gaz (4), dans lequel
ledit élément de détection de gaz (4) comporte une couche sensible (41) constitué d'au moins 90 % en masse d'oxyde d'étain, et une partie catalytique perméable au gaz (42) formée d'au moins 80 % en masse d'or au moins sur une partie de la surface de ladite couche sensible (41) et présentant une perméabilité au gaz,
ladite partie catalytique (42) possède une épaisseur en masse allant de 0,008 à 170 nm,
ladite partie catalytique (42) est formée de manière à recouvrir de 1,5 à 93 % de la surface de ladite couche sensible (41) en observant l'élément de détection de gaz (4) dans la direction traversant la dimension la plus mince dudit substrat (2),
la moyenne des dimensions maximales d'un grain de ladite partie catalytique (42) dans une direction plane est inférieure ou égale à 2 micromètres,
la structure de ladite couche sensible (41) est un agglomérat de grains cristallins d'oxyde d'étain en colonne ; et
la longueur moyenne du petit axe (d) desdits grains cristallins est de 7 à 65 nm.

2. Détecteur de gaz oxydant (1) selon la revendication 1, **caractérisé en ce que** l'élément chauffant (5) est formé dans une couche d'isolation de nitrure de silicium (33) enfermée entre la moitié supérieure (332) et la moitié inférieure (331) de la couche d'isolation en nitrure de silicium (33) dans une position correspondant à ladite partie d'espace ouvert (21).
